# EUROPÄISCHE PATENTANMELDUNG

(11) **EP 4 847 667 A2**
(43) Veröffentlichungstag der Anmeldung: **02.12.2026**
(21) Anmeldenummer: 26190606.9
(22) Anmeldetag: 22.12.2023
(51) Int. Cl.: C25B 15/08

(54) **ELEKTROLYSEANORDNUNG**

(62) Dokumentnummer(n) der früheren Anmeldung(en) nach Art. 76 EPÜ: 23219898.6 / 4 575 036
(71) Anmelder: Sunfire SE, 01237 Dresden (DE)
(72) Erfinder: Strohbach, Thomas, 01309 Dresden (DE); Vandercruysse, Felix, 82327 Tutzing (DE); Spura, David, 01219 Dresden (DE); Schade, Christoph, 01445 Radebeul (DE); Surrey, Alexander, 01219 Dresden (DE); Ammeux, Clément, 10781 Berlin (DE); Veselý, Jan, 54101 Trutnov (CZ); Pötschke, Martin, 01099 Dresden (DE); Lemberg, Kevin, 56075 Koblenz (DE)
(74) Vertreter: Hauck Patent- und Rechtsanwälte PartmbB

(57) **Zusammenfassung**

Elektrolyseanordnung umfassend wenigstens ein Gehäuse mit einem Innenraum, und wenigstens einer im Innenraum des Gehäuses angeordneten Stackanordnung, wobei die Stackanordnung mehrere in eine Stapelrichtung (S) gestapelte Elektrolysezellen umfasst, wobei zumindest einige der Elektrolysezellen jeweils eine Membran-Elektroden-Anordnung (MEA) und einen Interkonnektor umfassen, und wobei die Membran-Elektroden-Anordnung und der Interkonnektor jeweils eine Sauerstoffseite und eine Wasserstoffseite aufweisen, wobei in der Stackanordnung genau eine Eduktgas-Manifoldstruktur zur Bereitstellung von Eduktgas an die Elektrolysezellen und genau eine Produktgas-Manifoldstruktur zum Abführen von Produktgas von den Elektrolysezellen ausgebildet sind, wobei die Stackanordnung eine Eduktgas-Öffnung zur Einleitung von Eduktgas in die Eduktgas-Manifoldstruktur und eine Produktgas-Öffnung zur Ausleitung von Produktgas aus der Produktgas-Manifoldstruktur aufweist, wobei die Eduktgas-Manifoldstruktur und die Produktgas-Manifoldstruktur innerhalb der Stackanordnung jeweils mittels in den Interkonnektoren eingearbeiteten Manifoldöffnungen ausgebildet sind, wobei zwischen der Membran-Elektroden-Anordnung und dem Interkonnektor zumindest einiger Elektrolysezellen eine zur Leitung von Eduktgas aus der Eduktgas-Manifoldstruktur heraus entlang der Wasserstoffseite der Membran-Elektroden-Anordnungen und hin zur Produktgas-Manifoldstruktur ausgebildete Eduktgas-Leitungsstruktur angeordnet ist, wobei zumindest einige Membran-Elektroden-Anordnungen auf ihrer Sauerstoffseite eine sauerstoffdurchlässige Struktur aufweisen, und wobei die sauerstoffdurchlässige Struktur derart angeordnet und ausgebildet ist, dass ein an der Sauerstoffseite der Membran-Elektroden-Anordnung freigesetzter Sauerstoff in den Innenraum des Gehäuses ableitbar ist, wobei das Gehäuse eine Öffnung zur Ableitung von Sauerstoff aus dem Innenraum aufweist, und wobei die sauerstoffdurchlässige Struktur ein poröses Material umfasst und/oder in der Art von Führungskanälen ausgebildet ist.

## Beschreibung

Die Erfindung betrifft eine Elektrolyseanordnung, die in Elektrolyseanlagen wie beispielsweise in Hochtemperaturelektrolyseanlagen oder in Brennstoffzellenanlagen eingesetzt werden kann.

Die erfindungsgemäße Elektrolyseanordnung ist insbesondere geeignet für den Einsatz in Festoxid-Elektrolysezellen-Systemen (engl. Solid Oxide Electrolyzer Cell, SOEC) sowie in reversiblen Festoxidzellen-Systemen (engl. reversible Solid Oxide Cell, rSOC) im Elektrolysebetrieb. Solche Systeme werden vorwiegend für die Hochtemperatur-Elektrolyse (HTE) eingesetzt.

Ein Festoxid-Elektrolyseur (SOEC) umfasst mindestens eine Elektrolysezelle, mit der unter Einsatz elektrischer Energie Wasser (H₂O) in seine Bestandteile Wasserstoff (H₂) und Sauerstoff (O₂) aufgespaltet werden kann. Der Aufbau und die Funktion einer Festoxid-Elektrolysezelle ähneln denen einer Festoxid-Brennstoffzelle (SOFC, Solid Oxide Fuel Cell), da sie auf derselben Technologie basieren. Ein Hauptunterschied besteht darin, dass bei der Elektrolyse Wasserdampf (H₂O(g)) als Eingangsmedium (Eduktgas) verwendet wird, während bei der Brennstoffzelle Sauerstoff und Brenngas (z. B. Wasserstoff) als Eingangsmedien dienen.

Ein Festoxid-Elektrolyseur nutzt den Hochtemperaturbetrieb (typischerweise 650-1000°C), da der Wirkungsgrad gegenüber anderen Elektrolysetechnologien deutlich höher ist. Man macht sich hierbei zu Nutze, dass bei diesen Temperaturen die eingesetzten keramischen Materialien der Elektrolyte ionisch leitend werden. Ein Festoxid-Elektrolyseur besteht aus mehreren Komponenten, die jeweils unterschiedliche Funktionen erfüllen. Zu den wesentlichen Bestandteilen des Festoxid-Elektrolyseurs zählen ein Stack mit einer Vielzahl an Zellen, wobei eine Zelle unter anderen eine Anode, eine Elektrolytschicht und eine Kathode aufweist. Die Kathode enthält oft aus einem Gemisch von Nickel und Elektrolytmaterialien. Wasser, bei der Hochtemperaturelektrolyse in Form von Wasserdampf, wird an die Kathode geführt. Der Prozess der Elektrolyse läuft folgendermaßen ab: legt man eine elektrische Spannung an die Zelle an, die oberhalb der Leerlaufspannung (OCV) liegt, diffundiert das Wasser in die Kathode hinein, wo unter Aufnahme von Elektronen der elektrochemische Umsatz (Redoxreaktion) des Wasserdampfs stattfindet und Wasserstoff und Sauerstoffionen erzeugt werden. Die Elektrolytschicht besteht aus festem Elektrolytmaterial, wie zum Beispiel Yttrium-stabilisiertem Zirkoniumdioxid (YSZ). Diese Elektrolytschicht ermöglicht den Transport von Sauerstoffionen (O²⁻) von der Kathode zur Anode. Die Anode besteht aus Anodenmaterialien, wie beispielsweise Lanthan-Mangan-Cobaltit oder Lanthan-Ferrit. An der Anode werden aus den Sauerstoffionen (O²⁻ ) molekularer Sauerstoff (O₂) unter Abgabe von Elektronen erzeugt.

Festoxid-Elektrolysezellen sind aufgrund ihrer hohen Betriebstemperaturen effizient und können sauberen Wasserstoff produzieren. Sie finden Anwendung in der Wasserstoffherstellung, Energiespeicherung und anderen industriellen Prozessen.

Die Hochtemperatur-Elektrolyse (HTE) ist ein Elektrolyseverfahren zur Gewinnung von Wasserstoff aus Wasser bei hohen Temperaturen unter Einsatz elektrischer Energie. Im Gegensatz zur Niedertemperatur-Elektrolyse (LTE), die bei Temperaturen unter 100 Grad Celsius arbeitet, erfolgt die Hochtemperatur-Elektrolyse bei wesentlich höheren Temperaturen, typischerweise im Bereich von 500 bis 1000 Grad Celsius. Bei einer Niedertemperatur-Elektrolyse wird üblicherweise eine Polymerelektrolytmembranen (PEM) als Elektrolyt verwendet und daher häufig von einem PEM-Elektrolyseverfahren gesprochen. Die PEM ist eine dünne Polymermembran, die Protonen durchlässt, während sie Elektronen und Gase blockiert. Als Material für die PEM wird häufig ein perfluorsulfoniertes Polymer, wie Nafion, verwendet. Die PEM-Elektrolyse wird häufig in Anwendungen eingesetzt, bei denen eine schnelle Reaktionszeit und Flexibilität erforderlich sind. Dazu gehören zum Beispiel die Wasserstoffproduktion für Brennstoffzellenfahrzeuge, die Integration erneuerbarer Energien durch Elektrolyse und die dezentrale Wasserstoffproduktion.

In einer gattungsgemäßen Elektrolyseanordnung werden mehrere, häufig eine Vielzahl, von Membran-Elektroden-Einheiten (membrane-electrode-assembly; kurz MEA) in einem Stapelverbund angeordnet. Solche Stapel werden auch Elektrolysezellenstapel oder Brennstoffzellenstapel genannt. Solche Stapelverbunde weisen in der Regel eine Vielzahl von Ebenen auf, wobei jede MEA eines Stapelverbundes als eine Ebene betrachtet werden kann. Zwischen diesen Ebenen sind Interkonnektoren (auch bekannt als Bipolarplatten) angeordnet. In einem Stapelverbund werden eine Vielzahl dieser MEAs und Interkonnektoren als Wiederholeinheiten gestapelt. Der fertige Stapel wird auch als Stack bezeichnet. Derartige Stacks können mehrere hundert Ebenen, insbesondere mehr als 800 bzw. mehr als 900 Ebenen aufweisen.

Für den Elektrolyseprozess werden Gasströme der MEA zugeführt und von der MEA abgeführt. Das zugeführte Gas wird üblicherweise in auf der Oberfläche der MEA angeordneten Kanälen geführt.

Aus DE 102022121234 A1 ist ein Elektrochemischer Reaktionszellenstapel gemäß dem Oberbegriff des Anspruchs 1 bekannt, der mit mehreren elektrochemischen Reaktionseinheiten versehen ist, die in einer ersten Richtung nebeneinander angeordnet sind und jeweils umfassen: - eine Einzelzelle mit einer Elektrolytschicht sowie einer Anode und einer Kathode, die sich entlang der Elektrolytschicht in der ersten Richtung gegenüberliegen; sowie ein bestimmtes leitfähiges Element, das mit der Einzelzelle verbunden wird, und einen leitfähigen Interkonnektor, der mit der Einzelzelle elektronisch verbunden wird und einen leitfähigen Interkonnektorabschnitt aufweist, der dem bestimmten leitfähigen Element in der ersten Richtung gegenüberliegt: wobei in jeder elektrochemischen Reaktionseinheit eine der Anode zugewandte Brennstoffkammer und eine der Kathode zugewandte Luftkammer ausgebildet sind, wobei ein erster Gaskanal, bei dem es sich um mindestens einen Teil einer bestimmten Gaskammer handelt, die aus der Brennstoffkammer oder aus der Luftkammer besteht, von der ersten Richtung aus gesehen außerhalb der Einzelzelle durch das bestimmte leitfähige Element und den leitfähigen Interkonnektorabschnitt abgegrenzt ist, wobei bei dem elektrochemischen Reaktionszellenstapel eine bestimmte elektrochemische Reaktionseinheit, die mindestens eine der elektrochemischen Reaktionseinheiten ist, ein Gasdurchströmungselement umfasst, bei dem es sich um ein leitfähiges Gasdurchströmungselement handelt, das im ersten Gaskanal positioniert ist, und in dem ein zweiter Gaskanal ausgebildet ist, der einen Teil des ersten Gaskanal bildet, wobei die bestimmte elektrochemische Reaktionseinheit ein Isolierelement aufweist, das zwischen dem Gasdurchströmungselement und dem bestimmten leitfähigen Element oder dem leitfähigen Interkonnektorabschnitt positioniert ist.

Aus WO 2014014021 A1 ist eine Elektrolyseplatte mit einer Ionenaustauschmembran bekannt, die keine Flüssigkeits- und Gasdurchgangsbohrung aufweist, ein Paar Elektrodenplatten, die jeweils an beiden Oberflächen der Ionenaustauschmembran haften, einen Elektrolysetank mit einem Wasserstoffgaserzeugungstank und einem Sauerstoffgaserzeugungstank, die durch die Elektrolyseplatten als Trennplatten in die Elektrolyseplatten unterteilt sind und jeweils reines Wasser speichern, das der Elektrolyse unterzogen werden soll, einem Wasserstoffgas-Druckteil zum Entnehmen des aus dem Wasserstoffgaserzeugungstank erzeugten Wasserstoffgases unter Druck mit einem Druck, der den Anstieg des Wasserstands des im Wasserstoffgaserzeugungstank gespeicherten reinen Wassers auf einen vorgegebenen Wert oder mehr unterdrückt.

Gemäß EP 4047696 A1 ist ein SOC-Stack-Interkonnektor zur Gasverteilung für eine Brennstoff- und/oder eine Elektrolysezellenanordnung bekannt, aufweisend: - eine Basisplatte, die auf einer ersten Seite mit einer Membranelektrodenanordnung kontaktierbar ist, - eine auf der zweiten Seite der Basisplatte angeordnete Plattenstruktur, wobei die Plattenstruktur mit einer ersten Seite mit der Basisplatte und mit einer zweiten Seite mit einer weiteren Membranelektrodenanordnung kontaktierbar ist, wobei die Plattenstruktur eine erste Platte und eine zweite Platte umfasst, die übereinander angeordnet sind, und die erste Platte und die zweite Platte eine gemeinsame Verteilungsstruktur zur Gasverteilung ausbilden, wobei die erste und die zweite Platte sowie die Basisplatte jeweils einen Gaseinlass und einen Gasauslass aufweisen, und wobei sich die Hauptrichtung eines Fluidflusses durch die gemeinsame Verteilungsstruktur in einer linearen Richtung zwischen dem Gaseinlass und dem Gasauslass erstreckt, und die gemeinsame Verteilungsstruktur Verbindungen zu dem Gaseinlass und Verbindungen zu dem Gasauslass aufweist, dadurch gekennzeichnet, dass - die erste Platte als Teil der gemeinsamen Verteilungsstruktur ein erstes Lochmuster mit einer Vielzahl von Löchern in parallel angeordneten entlang der Hauptrichtung des Fluidflusses ausgerichteten Lochreihen aufweist und kanalfrei ausgebildet ist; - die zweite Platte als Teil der gemeinsamen Verteilungsstruktur ein zweites Lochmuster mit einer Vielzahl von Löchern in parallel angeordneten entlang der Hauptrichtung des Fluidflusses ausgerichteten Lochreihen aufweist und kanalfrei ausgebildet ist; und - das erste Lochmuster zu dem zweiten Lochmuster in Hauptrichtung des Fluidflusses versetzt ausgebildet ist, wobei eine Kanalstruktur in Hauptrichtung des Fluidflusses bei der Übereinanderanordnung der ersten und der zweiten Platte ausgebildet wird, die zwischen der ersten und der zweiten Platte in Hauptrichtung des Fluidflusses alterniert.

Aus EP 3360187 A1 ist ein System zur Regelung des Drucks eines Reaktors für Hochtemperatur-Elektrolyse oder Co-Elektrolyse (HTE) oder für einen unter Druck arbeitenden SOFC-Brennstoffzellenstapel bekannt. Der Betrieb des Systems umfasst: die Regelung stromaufwärts einer der Kammern des Volumenstroms eines feuchtigkeitshaltigen Gases, um die elektrochemische Stabilität eines voreingestellten Betriebspunkts zu gewährleisten; und die Druckregelung mithilfe von Ventilen, die stromabwärts des Stapels angeordnet sind, um Gase, einschließlich des feuchtigkeitshaltigen Gases, zu regulieren und die im Allgemeinen heiß sind.

Aus US 2008118803 A1 ist eine Brennstoffzelleneinheit bekannt, bestehend aus einem Elektrolyten mit einer Anode auf der einen Seite und einer Kathode auf der anderen Seite, die jeweils mit einem Strömungs-/Gasverteilungsgitter mit Gaszufuhr/-abfuhr versehen sind, wobei jedem Gitter eine Separatorplatte sowie eine auf die Separatorplatte wirkende Dichtung benachbart ist.

Die Erforschung herkömmlicher Elektrolysesysteme hat ergeben, dass die konstruktiven Ausgestaltungen bekannter Systeme Raum für die Optimierung der Elektrolyse mit hohem Wirkungsgrad bei dauerhaftem Betrieb lassen.

Die Aufgabe der vorliegenden Erfindung besteht darin, eine Elektrolyseanordnung anzugeben, die einen hohen Wirkungsgrad auch bei dauerhaftem Betrieb ermöglicht.

Die Aufgabe wird durch die in Anspruch 1 angegebene Elektrolyseanordnung gelöst. Vorteilhafte Ausgestaltungen sind Gegenstand der Unteransprüche.

Erfindungsgemäß ist eine Elektrolyseanordnung umfassend wenigstens ein Gehäuse mit einem Innenraum, und wenigstens einer im Innenraum des Gehäuses angeordneten Stackanordnung, wobei die Stackanordnung mehrere in eine Stapelrichtung gestapelte Elektrolysezellen umfasst, wobei zumindest einige der Elektrolysezellen jeweils eine Membran-Elektroden-Anordnung (MEA) und einen Interkonnektor umfassen, und wobei die Membran-Elektroden-Anordnung und der Interkonnektor jeweils eine Sauerstoffseite und eine Wasserstoffseite aufweisen. Die Elektrolyseanordnung zeichnet sich dadurch aus, dass in der Stackanordnung genau eine Eduktgas-Manifoldstruktur zur Bereitstellung von Eduktgas an die Elektrolysezellen und genau eine Produktgas-Manifoldstruktur zum Abführen von Produktgas von den Elektrolysezellen ausgebildet sind, wobei die Stackanordnung eine Eduktgas-Öffnung zur Einleitung von Eduktgas in die Eduktgas-Manifoldstruktur und eine Produktgas-Öffnung zur Ausleitung von Produktgas aus der Produktgas-Manifoldstruktur aufweist. wobei die Eduktgas-Manifoldstruktur und die Produktgas-Manifoldstruktur innerhalb der Stackanordnung jeweils mittels in den Interkonnektoren eingearbeiteten Manifoldöffnungen ausgebildet sind, wobei zwischen der Membran-Elektroden-Anordnung und dem Interkonnektor zumindest einiger Elektrolysezellen eine zur Leitung von Eduktgas aus der Eduktgas-Manifoldstruktur heraus entlang der Wasserstoffseite der Membran-Elektroden-Anordnungen und hin zur Produktgas-Manifoldstruktur ausgebildete Eduktgas-Leitungsstruktur angeordnet ist, und wobei zumindest einige Membran-Elektroden-Anordnungen auf ihrer Sauerstoffseite eine sauerstoffdurchlässige Struktur aufweisen, und wobei die sauerstoffdurchlässige Struktur derart angeordnet und ausgebildet ist, dass ein an der Sauerstoffseite der Membran-Elektroden-Anordnung freigesetzter Sauerstoff in den Innenraum des Gehäuses ableitbar ist, wobei das Gehäuse eine Öffnung zur Ableitung von Sauerstoff aus dem Innenraum aufweist, und wobei die sauerstoffdurchlässige Struktur ein poröses Material umfasst und/oder in der Art von Führungskanälen ausgebildet ist.

Der Interkonnektor einer erfindungsgemäßen Stackanordnung ist in einer bevorzugten Variante ein flaches Bauteil aus Metall. Das Bauteil kann beispielsweise aus dem unter der Bezeichnung Crofer 22 bekannte Material, wie die Werkstoffe 1.4760 X1CrTiLa22 oder 1.4755 - X1CrWNb-TiLa22-2, bestehen. Für eine schnelle und kostengünstige Herstellung einer Vielzahl von Interkonnektoren kann vorgesehen sein, dass der Interkonnektor ein ausgestanztes Blech ist. Grundsätzlich ist denkbar, dass die Formgestaltung der plattenförmig ausgebildeten Interkonnektoren frei wählbar ist, also insbesondere rund, kreisrund, oval, viereckig, dreieckig oder dergleichen. Es hat sich allerdings gezeigt, dass die Herstellung einer erfindungsgemäßen Stackanordnung begünstigt wird, wenn die Interkonnektoren rechteckig geformt sind. Der plattenförmige Interkonnektor kann somit schnell und leicht orientierbar gestapelt werden.

Der Interkonnektor und die Membran-Elektroden-Anordnung sind plattenförmige Elemente deren flächige Oberflächen jeweils eine Wasserstoff- und Sauerstoffseite definieren. Innerhalb der Stackanordnung sind die Wasserstoffseiten von unmittelbar aufeinander folgend angeordneten Membran-Elektroden-Anordnungen und Interkonnektoren zueinander gewandt. Ebenso sind die Sauerstoffseiten von unmittelbar aufeinander folgend angeordneten Membran-Elektroden-Anordnungen und Interkonnektoren zueinander zugewandt angeordnet, ebenso die Wasserstoffseiten. Während der Elektrolyse entsteht auf der Sauerstoffseite der Membran-Elektroden-Anordnung Sauerstoff, der durch den zwischen der Sauerstoffseite der Membran-Elektroden-Anordnung und der Sauerstoffseite des Interkonnektors gebildeten Raum abtransportiert wird. Ein zwischen der Wasserstoffseite einer Membran-Elektroden-Anordnung und eines Interkonnektors geführtes Eduktgas, hierbei Wasserdampf, wird bei der Elektrolyse auf der Wasserstoffseite der Membran-Elektroden-Anordnung in Produktgas, hierbei Wasserstoff, umgewandelt.

Der Raum zwischen den Sauerstoffseiten der Interkonnektoren und Membran-Elektroden-Anordnungen ist fluidisch von dem Raum zwischen den Wasserstoffseiten der Interkonnektoren und Membran-Elektroden-Anordnungen getrennt, um eine Vermischung von Wasserstoff und Sauerstoff zu verhindern. Dafür ist daran gedacht, Dichtungen auf der Wasserstoffseite und der Sauerstoffseite zwischen den Interkonnektoren und den Membran-Elektroden-Anordnungen vorzusehen.

Vorzugsweise sind die Eduktgas-Manifoldstruktur und/oder die Produktgas-Manifoldstruktur innerhalb der Stackanordnung in der Art eines Sacklochs ausgebildet. Die Eingangs- und Ausgangsöffnungen der beiden Manifoldstrukturen sind vorzugsweise in einer Bodenplatte der Stackanordnung ausgebildet. Denkbar ist grundsätzlich auch, die Eduktgas-Manifoldstruktur und/oder die Produktgas-Manifoldstruktur als Durchgangsöffnung in der Stackanordnung auszubilden. Bei einer sacklochartigen Ausgestaltung, die sich bei der erfindungsgemäßen Elektrolyseanordnung technisch bewährt hat, ist für jede Manifoldstruktur nur jeweils eine Öffnung in der Stackanordnung vorgesehen, und zwar vorzugsweise in der Bodenplatte. Die Manifoldstrukturen erstrecken sich dabei von der Bodenplatte in Stapelrichtung bis zu einer in Stapelrichtung letzten mit Eduktgas zu versorgenden Elektrolysezelle, vorzugsweise bis zu einer Topplatte.

Die die Manifoldstrukturen innerhalb der Stackanordnung begrenzenden Manifoldöffnungen der Interkonnektoren sind vorzugsweise vollständig offen, also stegfrei innerhalb ihres äußeren Öffnungsrandes ausgebildet. Jeder Interkonnektor hat dabei vorzugsweise nur genau eine Manifoldöffnung für die Ausbildung der Eduktgas-Manifoldstruktur und genau eine Manifoldöffnung für die Ausbildung der Produktgas-Manifoldstruktur.

Vorzugsweise sind die Interkonnektoren und die Membran-Elektroden-Anordnungen innerhalb der Stackanordnung derart angeordnet, dass die Membran-Elektroden-Anordnungen etwa mittig zu den übereinandergestapelten Interkonnektoren ausgerichtet sind. Die Membran-Elektroden-Anordnungen haben üblicherweise eine kleinere Flächengröße als der Interkonnektor, sodass die Randbereiche der Interkonnektoren frei, also von den Membran-Elektroden-Anordnungen unabgedeckt bleiben. In den freien Randbereichen der Interkonnektoren sind die Manifoldöffnungen für die Manifoldstrukturen angeordnet. Außerdem können in den freien Randbereichen Dichtungen vorgesehen sein, um übereinandergestapelte Interkonnektoren fluidisch dichtend und/oder elektrisch isolierend voneinander abzugrenzen.

Die Eduktgas-Leitungsstruktur ist im Bereich der von einer Membran-Elektroden-Anordnung abgedeckten Bereich zwischen Membran-Elektroden-Anordnung und Interkonnektor vorgesehen. Vorzugsweise ist die Eduktgas-Leitungsstruktur als eine mehrere Kanäle aufweisende Kanalstruktur ausgebildet, wobei die Kanäle das Eduktgas aus der Eduktgas-Manifoldstruktur an der Wasserstoffseite der Membran-Elektroden-Anordnung entlang und das an der Wasserstoffseite der Membran-Elektroden-Anordnung während der Elektrolyse entstehende Produktgas in die Produktgas-Manifoldstruktur führt. Die Kanalstruktur kann insbesondere aus geraden Kanälen ausgebildet sein, die untereinander von Kanalstegen getrennt sind. Die Membran-Elektroden-Anordnung kann dabei mit ihrer Wasserstoffseite auf den Kanalstegen aufliegen. Die Kanäle einer solchen Kanalstruktur haben vorteilhafterweise eine senkrecht zur Stapelrichtung ausgerichtete Führungsrichtung. Zur Unterstützung einer feinen und laminaren Strömung kann die Kanalstruktur eine Vielzahl von Kanälen aufweisen, beispielsweise 60 oder mehr als 60 Kanäle, insbesondere bis 100 Kanäle.

Die sauerstoffdurchlässige Struktur auf der Sauerstoffseite der Membran-Elektroden-Anordnung dient zur Ableitung von auf der Sauerstoffseite der Membran-Elektroden-Anordnung entstehendem Sauerstoff in den Innenraum des Gehäuses. Dafür ist gemäß einer bevorzugten Ausgestaltung daran gedacht, dass die sauerstoffdurchlässige Struktur im Bereich wenigstens einer Seitenfläche der Stackanordnung zur Ableitung des Sauerstoffs in den Innenraum des Gehäuses hin offen ausgebildet ist. Denkbar ist, dass die sauerstoffdurchlässige Struktur als Kanalstruktur ausgeführt ist, vorzugsweise eine in im Wesentlichen senkrechter Richtung bezüglich der Richtung einer Eduktgas-Kanalstruktur ausgerichtete Kanalstruktur. Die Kanäle können insbesondere rippenartig ausgebildet sein. Die Kanäle können seitlich durch Kanalstege begrenzt, nach unten durch den Körper der MEA und nach oben hin können die Kanäle offen sein, sodass ein zwischen der MEA und dem darüber angeordneter Interkonnektor entstehender Sauerstoff gerichtet ableitbar ist.

Eine Sauerstoffleitung in den Innenraum ist auch möglich, wenn die sauerstoffleitende Struktur als gasdurchlässiges Material, beispielsweise als poröse Keramik oder dergleichen ausgeführt ist. Insbesondere kann die sauerstoffleitende Struktur eine Schicht bzw. eine oder mehrere Beschichtungen der Membran-Elektroden-Anordnung sein. Der Sauerstofftransport kann insbesondere mittels eines Druckgefälles zwischen Innenraum des Gehäuses der Elektrodenanordnung und dem gasführenden Raum zwischen den Sauerstoffseiten von zwei unmittelbar übereinander angeordneter Membran-Elektroden-Anordnungen und Interkonnektoren erwirkt werden.

Die erfindungsgemäße Elektrolyseanordnung ermöglicht die Industrialisierung der SOEC Technologie mit hohen Stackanordnungen mit über 300 Elektrolysezellen. Insbesondere hat sich gezeigt, dass bei der erfindungsgemäßen Elektrolyseanordnung Stackanordnungen mit 900 Elektrolysezellen oder mehr als 900 Elektrolysezellen herstellbar und effizient betreibbar sind.

Technisch bewährt hat sich gemäß einer Ausgestaltung, dass in zumindest einigen Elektrolysezellen die Eduktgas-Leitungsstruktur auf der Wasserstoffseite des Interkonnektors der Elektrolysezelle ausgebildet ist. Alternativ oder zusätzlich kann vorgesehen sein, dass in zumindest einigen Elektrolysezellen die Eduktgas-Leitungsstruktur auf der Wasserstoffseite der Membran-Elektroden-Anordnungen der Elektrolysezelle ausgebildet ist.

Erfindungsgemäß ist vorgesehen, dass die sauerstoffdurchlässige Struktur ein poröses Material umfasst und/oder in der Art von Führungskanälen ausgebildet ist. Beide Varianten sind einfach herzustellen und fördern einen effizienten Betrieb der Elektrolysezellen.

Der Sauerstofftransport zwischen den Sauerstoffseiten direkt aneinander angrenzender Interkonnektoren und Membran-Elektroden-Anordnungen kann unterstützt werden, wenn auf der Sauerstoffseite mindestens einiger Interkonnektoren eine Sauerstoff-Leitungsstruktur zur Führung von auf der Sauerstoffseite einer Membran-Elektroden-Anordnung freigesetztem Sauerstoff ausgebildet ist. Diese Sauerstoff-Leitungsstruktur kann beispielsweise als eine gasleitende Beschichtung auf den Interkonnektoren aufgetragen sein und/oder als eine auf den Interkonnektoren angeordnete Kanalstruktur ausgebildet sein, insbesondere kann die Kanalstruktur eingefräst oder geätzt sein.

Gemäß einer Ausgestaltung kann vorgesehen sein, dass zumindest einige der Elektrolysezellen ein netzartiges Metallgeflecht, vorzugsweise aufweisend Nickel, insbesondere eine Eisen-Nickel-Legierung, umfassen, das zwischen Membran-Elektroden-Anordnung und Interkonnektor angeordnet ist. Der Anteil von Eisen zu Nickel in dem Metallgeflecht kann zum Beispiel bei 50:50 liegen. Denkbar ist auch die Verwendung einer Eisen-Chrom-Legierung, vorzugsweise das unter der Bezeichnung Crofer 22 bekannte Material, beispielsweise Werkstoff 1.4760 X1CrTiLa22 oder 1.4755 - X1CrWNbTiLa22-2.

Eine besonders effiziente und über die Höhe der Stackanordnung gut verteilte Zu- und Abfuhr von Edukt- und Produktgas kann dadurch unterstützt werden, dass die Eduktgas-Manifoldstruktur derart ausgebildet und eingerichtet ist, dass sich sein gasführender Querschnitt in Strömungsrichtung des durch die Eduktgas-Manifoldstruktur geführten Eduktgases verjüngt und/oder dass die Produktgas-Manifoldstruktur derart ausgebildet und eingerichtet ist, dass sich sein gasführender Querschnitt entgegen der Strömungsrichtung des durch die Produktgas-Manifoldstruktur geführten Produktgases verjüngt. Beispielsweise kann ein sich verjüngender Querschnitt durch eine geeignete Veränderung des Öffnungsquerschnitts der Manifoldöffnungen in den Interkonnektoren erreicht werden. Die Form des gasführenden Volumens innerhalb der Manifoldstrukturen kann dabei durch die Vielzahl der übereinandergestapelten Interkonnektoren eine gewünschte Formgebung annehmen. Alternativ oder zusätzlich kann die Form der Manifoldstrukturen mittels in die Manifoldstrukturen eingelegten Einlegekörpern vorgegeben sein.

Für die effektive Führung von Eduktgas und Produktgas kann insbesondere vorgesehen sein, dass die Eduktgas-Manifoldstruktur und/oder die Produktgas-Manifoldstruktur zumindest bereichsweise keilförmig, prismaförmig, prismastumpfförmig, pyramidenförmig, pyramidenstumpfförmig, konisch oder kegelstumpfförmig ausgebildet ist, und/oder dass wenigstens eine Wandfläche der Eduktgas-Manifoldstruktur und/oder der Produktgas-Manifoldstruktur in Stapelrichtung zumindest bereichsweise gewölbt verläuft. Um eine Vielzahl von unterschiedlich ausgestatteten Interkonnektoren zu vermeiden, was den Herstellungsaufwand und den Aufwand für die Zusammensetzung der Stackanordnung erhöhen würde, kann vorgesehen sein, in die Manifoldstrukturen anordbare Einlegekörper für die Formgebung zu verwenden.

Für eine effektive Gasversorgung der Elektrolysezellen kann zudem vorgesehen sein, dass die Eduktgas-Öffnung und/oder die Produktgas-Öffnung der Stackanordnung stegfrei ausgebildet ist, wobei insbesondere zumindest einige, vorzugsweise sämtliche der Eduktgas-Manifoldstruktur zugeordneten Manifoldöffnungen der Interkonnektoren und/oder zumindest einige, vorzugsweise sämtliche der Produktgas-Manifoldstruktur zugeordneten Manifoldöffnungen der Interkonnektoren stegfrei ausgebildet sind.

Eine Öffnung mit einem von seinem Öffnungsrand begrenzten vollständig freien Querschnitt, also einen Querschnitt, der frei von Stegen oder anderen Strömungshindernissen ist, somit also eine stegfreie Öffnung, ermöglicht eine störungsfreie Zu- bzw. Abfuhr von Gasen in bzw. aus den Manifoldstrukturen. Vorzugsweise ist die gesamte Eduktgas-Manifoldstruktur und/oder die gesamte Produktgas-Manifoldstruktur stegfrei ausgebildet, also derart, dass der gasführende Raum keine, den Raum unterteilende Stützstruktur oder Strukturteile anderer Art aufweist. Die Strömung der Gase kann im Wesentlichen laminar erfolgen.

Je mehr Elektrolysezellen und damit je mehr Ebenen die Stackanordnung aufweist, desto größer muss die Eduktgas-Öffnung bzw. die Produktgas-Öffnung und die zugehörigen Manifoldstrukturen der Stackanordnung sein, um die für einen effiziente Elektrolysebetrieb benötigte Gaszufuhr an die Elektrolysezellen bereitzustellen. Mittels einer sich verjüngenden Manifoldstruktur insbesondere der Eduktgas-Manifoldstruktur kann die Gaszufuhr besonders laminar in die Zellen strömen, um dort effizient umgesetzt zu werden. Dies befördert eine hocheffiziente Elektrolyse mit der erfindungsgemäßen Elektrolyseanordnung.

Konkret kann vorgesehen sein, dass die Querschnittsfläche der Eduktgas-Öffnung und/oder der Produktgas-Öffnung der Stackanordnung im Bereich von 9% bis 22%, vorzugsweise im Bereich von 12% bis 20%, insbesondere im Bereich von 13% bis 18% des durchschnittlichen mit Eduktgas anströmbaren Oberflächenquerschnitts der Membran-Elektroden-Anordnungen der Stackanordnungen beträgt.

Für eine Einfassung der Stackanordnung, die eine Applikation hoher Druckkräfte auf den Stapelverbund der Stackanordnung erlaubt, ist daran gedacht, dass die Stackanordnung in Stapelrichtung oben eine die Stackanordnung nach oben begrenzende Topplatte und in Stapelrichtung unten eine die Stackanordnung nach unten begrenzende Bodenplatte aufweist.

Als Übergang zwischen einer Bodenplatte und der in Stapelrichtung ersten Elektrolysezelle der Stackanordnung bzw. zwischen der in Stapelrichtung letzten Elektrolysezelle und einer Topplatte der Stackanordnung ist gemäß einer Ausgestaltung daran gedacht, dass zwischen der Topplatte und der in Stapelrichtung letzten, unterhalb der Topplatte angeordneten Membran-Elektroden-Anordnung eine Konnektorplatte angeordnet ist und/oder dass zwischen der Bodenplatte und der in Stapelrichtung ersten, oberhalb der Bodenplatte angeordneten Membran-Elektroden-Anordnung eine Konnektorplatte angeordnet ist.

Gemäß einer bevorzugten Ausgestaltung ist vorgesehen, dass die Konnektorplatte als ein plattenförmiges Blech ausgeführt ist, wobei die äußere Konturform der Konnektorplatte zumindest im Wesentlichen der Konturform des in Stapelrichtung benachbart zu der Konnektorplatte angeordneten Interkonnektors entspricht, und wobei die Konnektorplatte vorzugsweise frei von gasleitenden Strukturen ist.

Eine derartige Konnektorplatte, die vorzugsweise eine der Interkonnektoren entsprechende Konturform aufweist, kann verschiedene Funktionen erfüllen. Einerseits kann die Konnektorplatte eine elektrisch leitende Verbindung zwischen der Bodenplatte bzw. Topplatte und der ersten bzw. letzten Elektrolysezelle herstellen. Außerdem kann die Konnektorplatte dazu ausgebildet und eingerichtet sein, insbesondere in Stapelrichtung gerichtete mechanische Spannungen in der Stackanordnung aufzunehmen und zu kompensieren. Damit kann die Gefahr von Spannungsrissen in den Elektrolysezellen der Stackanordnung und insbesondere in den Membran-Elektroden-Anordnungen der Elektrolysezellen verringert werden. Insbesondere kann die Konnektorplatte dazu dienen, Unebenheiten der übereinander angeordneten Elektrolysezellen, die eine elektrische Kontaktierung mit der Top- oder Bodenplatte verringern können, auszugleichen. Diese Unebenheiten können zum Beispiel durch ein Fügen der Stackanordnung bei seiner Montage entstehen. Die Konnektorplatte stellt aufgrund ihrer Flexibilität im Vergleich zur Top- oder Bodenplatte einen flächigen Kontakt zum Stapel der Elektrolysezellen her, wobei die Konnektorplatte wiederum mit der Top- oder Bodenplatte elektrisch in Kontakt ist.

Eine zwischen der Bodenplatte und der in Stapelrichtung ersten Elektrolysezelle oberhalb der Bodenplatte angeordnete Konnektorplatte weist vorzugsweise Manifoldöffnungen auf, wenn sie die Eduktgas-Öffnung bzw. die Produktgasöffnung der Bodenplatte überdeckt. Grundsätzlich kann die Konnektorplatte die gleichen Außenmaße, insbesondere die gleichen Dickenmaße wie ein Interkonnektor aufweisen. Sie kann aber insbesondere auch dicker oder dünner sein als ein Interkonnektor. Vorzugsweise sind Interkonnektoren und Konnektorplatten vom gleichen Material. Eine Konnektorplatte ist vorzugsweise elektrisch leitend, derart, dass zwischen Konnektorplatte und Bodenpatte bzw. Topplatte eine elektrische Kontaktierung hergestellt wird.

Die Konnektorplatte kann unter anderem dazu dienen, mechanische über die Querschnittsfläche der Stackanordnung senkrecht zur Stapelrichtung gesehen unterschiedliche Druckkräfte zu kompensieren. Beispielsweise können aufgrund einer etwa mittig zu einem Interkonnektor angeordneten MEA mittig in der Stackanordnung höhere Druckkräfte auftreten als im Randbereich der Stackanordnung. Entsprechend kann vorgesehen sein, die Konnektorplatte in ihrem Randbereich dicker auszugestalten als in ihrem Mittenbereich.

Gemäß einer Ausgestaltung ist vorgesehen, dass die Konnektorplatte, und/oder die Topplatte und/oder die Bodenplatte eine Beschichtung aufweist, wobei die Beschichtung eine halbleitende Oxid-Keramik umfasst, insbesondere eine Keramik aufweisend Lanthan (La), Strontium (Sr), Mangan (Mn) und/oder Cobalt (Co), vorzugsweise Lanthan-Strontium-Mangan-Cobalt (LSMC), Mangan Cobalt Eisenoxid (MCF), Lanthan Strontium Manganit (LSM), Lanthan-Strontium-Cobalt-Eisenoxid (LSCF) oder Lanthan-Mangan-Cobalt (LMC).

Hinsichtlich der Beschichtung der Konnektorplatte ist daran gedacht, dass die Konnektorplatte mindestens auf einer Seite zumindest bereichsweise eine Beschichtung aufweist, insbesondere derart, dass mehrere voneinander beabstandete Oberflächenbereiche der Konnektorplatte beschichtet sind, vorzugsweise in Form eines Schachbrettmusters. Die freien Bereiche zwischen den Beschichtungszonen können helfen, einen hohen Binderanteil in der Beschichtung bei der Abbindung der Schicht, beispielsweise in einem Fügeprozess bei der Herstellung der Stackanordnung, entweichen zu lassen. Ohne ausreichende Möglichkeit für ein Entweichen des Binderanteils, beispielsweise mittels der freien Bereiche zwischen den Beschichtungszonen, kann es zu Porenbildung oder unerwünschten Höhenunterschieden auf der Konnektorplatte nach dem Abbinden der Beschichtung kommen.

Zur Unterstützung eines Fügeprozesses bei der Herstellung der erfindungsgemäßen Stackanordnung und zur Aufrechthaltung einer Spannkraft zwischen der Bodenplatte und der Topplatte der Stackanordnung kann vorgesehen sein, dass die Topplatte und die Bodenplatte jeweils Spanneinrichtungen aufweisen, insbesondere in Form von jeweils am Randbereich der Topplatte und der Bodenplatte nach außen ragenden Halteelementen, derart dass außen an der Stackanordnung in einem Abstand zur Stackanordnung Spannmittel zwischen den Spanneinrichtungen der Topplatte und der Bodenplatte angeordnet werden können, mittels der eine zwischen Topplatte und Bodenplatte entlang der Stapelrichtungsachse wirkende Zugkraft aufbringbar ist.

Die Spanneinrichtungen können insbesondere derart angeordnet sein, dass die Halteelemente in Stapelrichtung oben und unten fluchten. Somit lässt sich leicht ein parallel zur Achse der Stapelrichtung verlaufendes Spannmittel an den Haltelementen befestigen, mit dem eine parallel zur Stapelrichtungsachse verlaufende Zugkraft zwischen Topplatte und Bodenplatte aufbringbar ist. Denkbar ist, dass die Halteelemente der Bodenplatte und/oder der Topplatte Bohrungen zur Aufnahme bzw. Befestigung von Spannmitteln aufweisen. Als Spannmittel können beispielsweise ein Stab/Stäbe oder ein Gurt dienen, der mit den Halteelementen der Topplatte und der Bodenplatte verbunden wird. Für die Anordnung von Spannmitteln zwischen Topplatte und Bodenplatte ist darauf zu achten, dass die Spannmittel keinen Potentialausgleich zwischen Topplatte und Bodenplatte bzw. mit in der Stackanordnung angeordneten Interkonnektoren herstellen. Die Spannmittel sollten also zumindest im Kontaktbereich der Spanneinrichtungen von Topplatte und/oder Bodenplatte elektrisch isoliert bzw. nicht leitfähig sein.

Für die elektrische Kontaktierung von Topplatte bzw. Bodenplatte, insbesondere zur Einspeisung einer für den Elektrolyseprozess nötigen elektrischen Energie in die Stackanordnung ist daran gedacht, dass die Topplatte und/oder die Bodenplatte Kontakteinrichtungen zur elektrischen Kontaktierung der Topplatte und/oder der Bodenplatte aufweisen. In einer besonders vorteilhaften Ausgestaltung ist daran gedacht, dass die Kontakteinrichtungen mittels der Spanneinrichtungen ausgebildet sind.

Für die kontrollierte Ableitung von Sauerstoff aus dem Gehäuse der Elektrolyseanordnung ist daran gedacht, dass die Öffnung des Gehäuses von einem einstellbaren Ventil beherrscht wird. Insbesondere kann vorgesehen sein, dass ein Sauerstoff-Partialdruck im Innenraum des Gehäuses mittels des Ventils regelbar ist.

Für die Identifizierbarkeit und die Möglichkeit einer Nachverfolgbarkeit einzelner Komponenten einer Elektrolyseanlage kann vorgesehen sein, dass zumindest einige Komponenten der Elektrolyseanordnung, wie Gehäuse, Stackanordnung, Elektrolysezelle, Membran-Elektroden-Anordnungen, Interkonnektoren, Konnektorplatte, Topplatte und/oder Bodenplatte einen maschinenlesbaren und/oder menschenlesbaren Identifikator aufweisen.

Insbesondere kann vorgesehen sein, dass der Identifikator einen DataMatrix-Code (DMC), einen QR-Code, einen Strichcode und/oder einen alphanumerischen Code umfasst.

Die Herstellung einer Stackanordnung kann dadurch erleichtert werden, dass zumindest einige Komponenten der Stackanordnung, wie Membran-Elektroden-Anordnungen, Interkonnektoren, Konnektorplatten, Topplatte und/oder Bodenplatte jeweils ein Orientierungsmerkmal aufweisen mittels dem die Komponenten zur Herstellung der Stackanordnung orientiert, insbesondere nach dem Poka-Yoke-Prinzip, im Stapelverbund ausrichtbar sind.

Insbesondere mit einem Orientierungsmerkmal an den Interkonnektoren können diese zur Herstellung des Stapelverbunds der Stackanordnung vorteilhafterweise derart manuell, maschinell oder maschinenunterstützt, insbesondere mittels Poka-Yoke-Prinzip orientiert und angeordnet werden, dass ein bestimmtes Ausrichtungsmuster innerhalb der Stackanordnung erreicht wird. Die Orientierungsmerkmale erleichtern die Erkennung der Orientierung der Komponenten, um Fehler zu mindern oder vollständig zu vermeiden.

Es kann insbesondere vorgesehen sein, dass zumindest einige Interkonnektoren in der Stackanordnung anhand von an den Interkonnektoren angeordneten Orientierungsmerkmalen abwechselnd um 180° gedreht gestapelt sind. Die 180°-Drehung kann um die in Stapelrichtung verlaufende Achse erfolgen. Diese Drehung kann beispielsweise erfolgen, um einseitig an einem Rand oder spiegelsymmetrisch an zwei gegenüberliegenden Rändern der Interkonnektoren im Stapelverbund der Stackanordnung mit abwechselnder Platzierung anzuordnen. Beispielsweise können so Kontakteinrichtungen für den Anschluss elektrischer Anschlusskörper derart abwechselnd in der Stackanordnung platziert werden, dass sie für eine spätere Kontaktierung, beispielsweise zum Testen der Funktionalität der Stackanordnung nach dem Fügen, besser zugänglich sind.

Für eine elektrische Kontaktierung der Interkonnektoren, zum Beispiel zur messtechnischen Erfassung des elektrischen Potentials einer Elektrolysezelle kann vorgesehen sein, dass zumindest einige der Interkonnektoren in ihrem Randbereich mindestens eine Kontakteinrichtung aufweisen, die elektrisch leitend mit dem Interkonnektor verbunden ist.

Für die Ausgestaltung der Kontakteinrichtungen der Interkonnektoren sind grundsätzlich verschiedene Ausgestaltungen denkbar. Vorzugsweise ist jedenfalls daran gedacht, dass die Kontakteinrichtungen derart eingerichtet und ausgebildet sind, dass auch in einem eng gestapelten Stapelverbund der Stackanordnung Messmittel einfach und unter geringer Gefahr einer elektrischen Überbrückung gestapelter Interkonnektoren ermöglicht ist. Gemäß einer ersten Variante kann vorgesehen sein, dass die Kontakteinrichtung ein in den Randbereich des Interkonnektors eingearbeitetes Loch, insbesondere ein Langloch umfasst. Mit einem Loch bzw. Langloch, insbesondere in Stapelrichtung gesehen durch den Interkonnektor hindurch, können dafür geeignete Messmittel schnell und einfach, insbesondere kraft- und/oder formschlüssig mit dem Interkonnektor verbunden werden. Die Kontakteinrichtungen können am Seitenrand der Stackanordnung seitlich nach außen abstehen, um eine leichte Kontaktierung zu unterstützen.

Vorzugsweise können die Kontakteinrichtungen jedoch derart angeordnet sein, dass sie innerhalb des Seitenrandes der Stackanordnung angeordnet sind. Die Seitenkontur der Stackanordnung zwischen Topplatte und Bodenplatte ist in seiner Orthogonalprojektion auf eine Ebene senkrecht zur Stapelrichtung beispielsweise etwa rechteckförmig mit vier geraden Seitenkanten ausgebildet.

Um eine schnelle Kontaktierung zu ermöglichen und die Gefahr einer ungewollten elektrischen Überbrückung übereinandergestapelter Interkonnektoren zu verringern, ist daran gedacht, dass die jeweils mindestens eine Kontakteinrichtung aufweisenden Interkonnektoren derart ausgebildet und/oder innerhalb der Stackanordnung angeordnet sind, dass die Kontakteinrichtungen der Interkonnektoren zweier übereinandergestapelter Elektrolysezellen quer zur Stapelrichtung versetzt zueinander angeordnet sind.

Zur weiteren Verbesserung einer schnellen und sicheren Kontaktierung der Interkonnektoren kann vorgesehen sein, dass die Interkonnektoren in ihren Randbereichen Aussparungen aufweisen, die in Stapelrichtung der Stackanordnung jeweils fluchtend mit der Kontakteinrichtung eines direkt oberhalb und unterhalb angeordneten Interkonnektors angeordnet sind. Somit ist die Kontakteinrichtung eines Interkonnektors prominent gegenüber den Kontakteinrichtungen seiner unmittelbaren Nachbarn im Stapelverbund und es wird eine zielsichere Kontaktierung unterstützt.

Zur Begriffsbestimmung sei Folgendes angemerkt. Im Rahmen der vorliegenden Anmeldung ist mit dem Begriff "Interkonnektor" sowohl ein Interkonnektor als auch eine Bipolarplatte gemeint. Die in dieser Anmeldung enthaltenen Ausführungen zu Interkonnektoren gelten entsprechend auch für Bipolarplatten. Als Hochtemperaturelektrolyse wird im Rahmen der vorliegenden Anmeldung eine Elektrolyse im Temperaturbereich zwischen 600 °C und 1000 °C, insbesondere 800 °C und 950 °C gemeint. Jedoch ist die Hochtemperaturanalyse nicht auf diesen Temperaturbereich beschränkt, sondern kann auch bei höheren Temperaturen beispielsweise bis 1400°C durchgeführt werden.

Die vorliegende Erfindung wird anhand der nachfolgenden Zeichnungen näher erläutert. Es zeigen:
- Fig. 1: eine stark schematisierte Darstellung einer erfindungsgemäßen Elektrolyseanordnung,
- Fig. 2: eine vereinfachte Explosionsdarstellung einer bevorzugten Variante von MEA, Interkonnektoren und Glasdichtungen einer erfindungsgemäßen Elektrolyseanordnung,
- Fig. 3: eine vereinfachte Explosionsdarstellung eines generellen Aufbaus einer Stackanordnung einer erfindungsgemäßen Elektrolyseanordnung,
- Fig. 4a, 4b, 4c: eine vereinfachte Schnittdarstellung einer der Länge nach halbierten Stackanordnung mit sich verjüngender Manifoldstruktur,
- Fig. 5: eine vereinfachte Explosionsdarstellung von gestapelten Interkonnektoren,
- Fig. 6a, 6b: eine Detailansicht von Glasdichtungen auf einem Interkonnektor,
- Fig. 7: eine Konnektorplatte, und
- Fig. 8: eine stark schematisierte Schnittdarstellung von Kanalquerschnitten auf einem Interkonnektor.

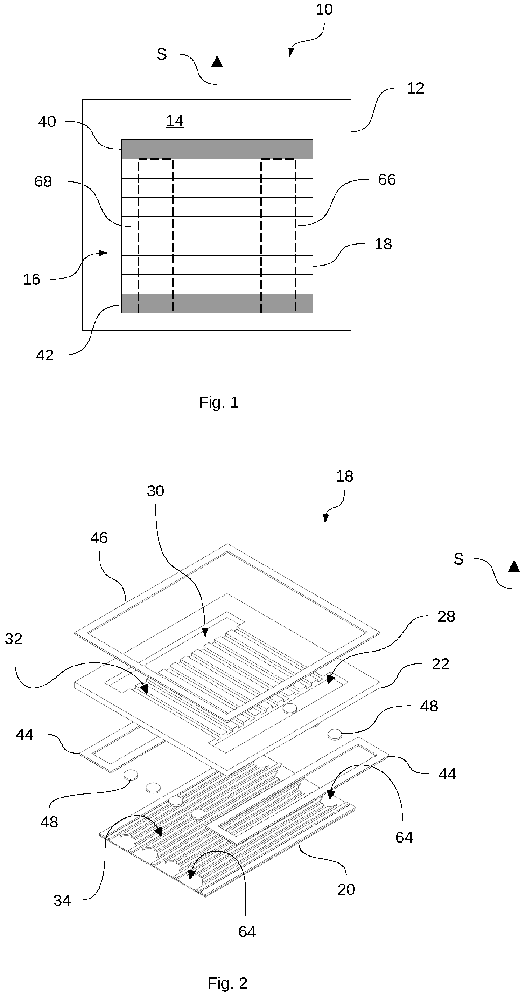

Figur 1 zeigt in stark schematisierter Darstellung eine erfindungsgemäße Elektrolyseanordnung 10 mit einem Gehäuse 12 und einer im Innenraum 14 des Gehäuses 12 angeordneten Stackanordnung 16. Die Stackanordnung 16 umfasst mehrere Elektrolysezellen 18, die im vorliegenden Beispiel in Stapelrichtung S unten von einer Bodenplatte 42 und oben von einer Topplatte 40 eingefasst sind. Gestrichelt sind eine Eduktgas-Manifoldstruktur 66 und eine Produktgas-Manifoldstruktur 68 angedeutet. Innerhalb der Eduktgas-Manifoldstruktur 66 wird ein Eduktgas, wie Wasserdampf (H₂O(g)) in die Stackanordnung 16 hineingeleitet und an die Elektrolysezellen 18 hingeführt. In der Produktgas-Manifoldstruktur 68 wird ein Produktgas, wie Wasserstoff (H₂), von den Elektrolysezellen 18 weggeführt und aus der Stackanordnung 16 herausgeleitet.

Figur 2 zeigt eine Explosionsdarstellung einer bevorzugten Variante einer Elektrolysezelle, bestehend aus einer Membran-Elektroden-Anordnung (MEA) 20, einem Interkonnektor 22 sowie einer oberhalb des Interkonnektors 22 angeordneten Glasdichtung 46 und zweier unterhalb des Interkonnektors 22 angeordneter Glasdichtungen 44. Die plattenförmig ausgebildete MEA 20 weist eine Wasserstoffseite (nicht gezeigte Unterseite) und eine Sauerstoffseite (gezeigte Oberseite) auf. Auch der ebenfalls etwa plattenförmig ausgebildete Interkonnektor 22 weist eine Wasserstoffseite (gezeigte Oberseite) und eine Sauerstoffseite (nicht gezeigte Unterseite) auf.

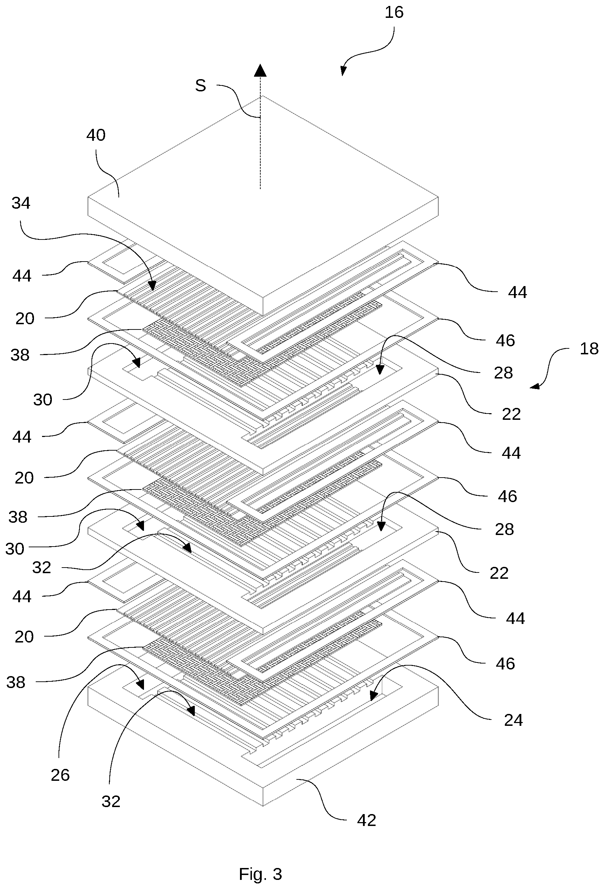

Die Sauerstoffseite des Interkonnektors 22 liegt im zusammengesetzten Zustand der Elektrolysezelle auf der Sauerstoffseite der MEA 20 auf. Zur Ausbildung einer Stackanordnung 16 (vgl. Fig. 1 oder Fig. 3) werden mehrere Elektrolysezellen 18 in eine Stapelrichtung S übereinandergestapelt. Entsprechend schließt sich auf der Wasserstoffseite des Interkonnektors 22 eine MEA 20 an. Die sich anschließende MEA 20 eines in Stapelrichtung S unmittelbar folgend oberhalb angeordneten Elektrolysezelle 18 liegt mit ihrer Wasserstoffseite auf der Wasserstoffseite des Interkonnektors 22 der direkt unterhalb angeordneten Elektrolysezelle 18.

Der Interkonnektor 22 weist zwei Manifoldöffnungen 28, 30 auf, wobei eine erste Manifoldöffnung 28 für die Führung von Eduktgas dient und wobei die zweite Manifoldöffnung 30 für die Führung von Produktgas dient. Auf der Sauerstoffseite des Interkonnektors 22 sind zwei Glasdichtungen 44 jeweils um den Öffnungsrand der Manifoldöffnungen 28, 30 herum angeordnet. Die Glasdichtungen 44 dichten die Manifoldöffnungen 28, 30 zweier übereinandergestapelter Elektrolysezellen 18 derart ab, dass ein Eduktgasstrom bzw. der Produktgasstrom jeweils durch eine mittels der Manifoldöffnungen 28, 30 übereinandergestapelter Elektrolysezellen 18 ausgebildete Eduktgas-Manifoldstruktur 66 bzw. Produktgas-Manifoldstruktur 68 geführt wird. Die einzelnen Elektrolysezellen 18 sind darüber hinaus derart ausgestaltet, dass ein in einer Eduktgas-Manifoldstruktur 66 geführter Eduktgasstrom von dort auf die Wasserstoffseite des Interkonnektors 22 geführt werden kann. Auf der Wasserstoffseite des Interkonnektors 22 kommt der Eduktgasstrom für den Elektrolysevorgang mit der Wasserstoffseite einer auf der Wasserstoffseite des Interkonnektors 22 aufliegenden MEA 20 in Kontakt. Bei dem Elektrolysevorgang wird das Eduktgas zwischen der Wasserstoffseite des Interkonnektors 22 und der Wasserstoffseite der MEA 20 in Produktgas gewandelt. Das entstehende Produktgas wird auf der Wasserstoffseite des Interkonnektors 22 weiter bis in die für die Führung von Produktgas vorgesehene Manifoldöffnung 30 des Interkonnektors 22 geführt.

Zur Führung von Eduktgas aus der das Eduktgas führenden Manifoldöffnung 28 des Interkonnektors 22 kann - wie im gezeigten Beispiel - auf der Wasserstoffseite des Interkonnektors 22 eine Eduktgas-Leitungsstruktur 32 ausgebildet sein. Die Kanalstruktur auf dem Interkonnektor 22 kann 60 bis 100 Kanäle aufweisen, um eine feine, laminare Strömung zu realisieren.

Wie in Fig. 2 ebenfalls angedeutet, kann auf der Sauerstoffseite der MEA 20 eine als Kanalstruktur ausgebildete sauerstoffdurchlässige Struktur 34 zur Führung von dort erzeugtem Sauerstoff ausgebildet sein. Die sauerstoffdurchlässige Struktur 34 kann derart ausgebildet und eingerichtet sein, dass der Sauerstoff in seitliche Richtung, quer zur Ausrichtung der Eduktgas-Leitungsstruktur 32, abgeleitet wird. Die Elektrolysezelle 18 ist derart ausgestaltet, dass in einer gestapelten Anordnung mehrerer Elektrolysezellen 18 zur Ausbildung einer Stackanordnung 16 der Sauerstoff aus der Stackanordnung 16 in den Innenraum 14 des Gehäuses 12 entlassen wird.

Glasdichtungen 44, 46 auf der Wasserstoffseite und auf der Sauerstoffseite des Interkonnektors 22 sorgen für eine gasdichte Abdichtung von in einer Stackanordnung 16 gestapelter Elektrolysezellen 18 untereinander, insbesondere der Interkonnektoren 22 direkt benachbarter Elektrolysezellen 18 untereinander, derart dass die Eduktgas-Manifoldstruktur 66 und die Produktgas-Manifoldstruktur 68 gegenüber dem Innenraum 14 des Gehäuses 12 fluidisch voneinander getrennt sind. Die Glasdichtung 46 auf der Wasserstoffseite des Interkonnektors 22 ist derart angeordnet, dass sie den Interkonnektor 22 im Randbereich seiner Wasserstoffseite vollumfänglich umläuft. Im zusammengesetzten Zustand der Stackanordnung 16 dichtet die Glasdichtung 44 einen in Stapelrichtung S ersten Interkonnektor 22 auf seiner Wasserstoffseite gegen einen in Stapelrichtung S angrenzend angeordneten zweiten Interkonnektor 22 auf dessen Sauerstoffseite ab. Die Glasdichtungen 44, 46 wirken derart mit den Interkonnektoren 22 gestapelter Elektrolysezellen 18 zusammen, dass zum einen zwischen den Wasserstoffseiten direkt aufeinander angeordneter MEA 20 und Interkonnektor 22 eine die Eduktgas-Manifoldstruktur 66 für das Eduktgas und die Produktgas-Manifoldstruktur 68 für das Produktgas fluidisch leitende Verbindung ausgebildet ist. Des Weiteren wirken die Glasdichtungen 44, 46 derart mit den Interkonnektoren 22 gestapelter Elektrolysezellen 18 zusammen, dass der Zwischenraum zwischen den Sauerstoffseiten direkt aufeinander angeordneter MEA 20 und Interkonnektor 22 fluidisch leitend mit dem Innenraum 14 des Gehäuses 12 einer Elektrolyseanordnung 10 verbunden ist.

Auf der Sauerstoffseite der MEA 20 können - wie in Fig. 2 gezeigt - zwischen der MEA 20 und dem Interkonnektor 22 Auflageelemente 48 vorgesehen sein, die einem mechanischen Spannungsausgleich zwischen MEA 20 und Interkonnektor 22 dienen, insbesondere hervorgerufen durch Temperaturunterschiede. Vorzugsweise sind die Auflageelemente 48 aus Glas oder einer Glaskeramik und werden daher auch Glaspins genannt. Wenn sich die Elektrolysezelle 18 erwärmt, entsteht durch die unterschiedlichen thermischen Wärmeausdehnungskoeffizienten der unterschiedlichen Materialien der verschiedenen Komponenten der Elektrolysezelle 18 mechanische Spannungen. Die MEA 20 ist mit einer Dicke von weit unter einem Millimeter, zum Beispiel 80 µm, vorzugsweise 30 µm, eine fragile Struktur, die bei mechanischer Belastung reißen oder brechen kann, insbesondere punktuelle Drucklast führt zu Brüchen in der MEA 20. Die Auflageelemente 48 sorgen gemeinsam mit den Dichtungen 44, 46 dafür, eine Wölbung der MEA 20 bei Erwärmung der Elektrolysezelle 18 zu vermindern. Die Auflageelemente 48 können zumindest bereichsweise in Aussparungen 64 der MEA 20 angeordnet sein, wobei die Aussparungen 64 vorzugsweise nichtdurchdringend in die MEA 20 eingearbeitet sind. Die Aussparungen 64 sind dabei vorzugsweise in eine erste Schicht der MEA 20 eingearbeitet. Alternativ werden die Aussparungen 64 dadurch gebildet, dass mehrere Schichten auf die MEA 20 aufgebracht werden und dabei bereichsweise Schichten nicht aufgetragen werden.

Figur 3 zeigt eine vereinfachte Explosionsdarstellung in schematischer Art des generellen Aufbaus einer Stackanordnung 16. In dem in Figur 3 gezeigten Beispiel weist die Stackanordnung 16 drei MEAs 20, also drei Ebenen auf. Die erfindungsgemäße Stackanordnung 16 kann alternativ auch weniger oder mehr MEAs 20 und somit entsprechend mehr Ebenen umfassen. Die Anzahl der Ebenen richtet sich nach der gewünschten Leistungsfähigkeit der Elektrolyseanordnung 10. Deckenseitig oberhalb der in Stapelrichtung S letzten MEA 20 schließt die Stackanordnung 16 mit einer Topplatte 40 ab. Bodenseitig unterhalb der in Stapelrichtung ersten MEA 20 schließt die Stackanordnung 16 mit einer Bodenplatte 42 ab.

Oberhalb der Bodenplatte 42 sind drei Elektrolysezellen 18 angeordnet, wobei die Elektrolysezellen 18 in dem gezeigten Beispiel jeweils ein vorzugsweise als Nickelnetz ausgeführtes netzartiges Metallgeflecht 38, eine MEA 20, zwei für die Abdichtung der Manifoldöffnungen 28, 30 der Interkonnektoren 22 vorgesehene Glasdichtungen 44, ein Interkonnektor 22 und eine weitere für die Abdichtung des Randbereiches der Interkonnektoren 22 vorgesehene Glasdichtung 46 umfassen. Das netzartiges Metallgeflecht 38 ist optional. Das netzartige Metallgeflecht 38 kann eine gasführende Struktur bilden und kann weiterhin dem mechanischen Stützen der MEA 20 auf dem Interkonnektor 22 dienen. Die Bodenplatte 42 ist vorliegend auf ihrer Oberseite analog zu einer Wasserstoffseite eines Interkonnektors 22 ausgebildet und wird mit einer auf der Oberseite angeordneten Glasdichtung 46 gegenüber dem Interkonnektor 22 der in Stapelrichtung S ersten Elektrolysezelle 18 abgedichtet. Die in Stapelrichtung S dritte und abschließende Elektrolysezelle 18 weist statt eines Interkonnektors 22 eine Topplatte 40 auf, die auf ihrer Unterseite analog zu einer Sauerstoffseite eines Interkonnektors 22 ausgebildet ist. Anders als die Interkonnektoren 22 weist die Topplatte keine Manifoldöffnungen 28, 30 auf. Die Topplatte 40 schließt die Stackanordnung 16 in Stapelrichtung S oben ab und verschließt die in der Stackanordnung 16 ausgebildeten Eduktgas- und Produktgas-Manifoldstrukturen 66, 68.

Die erfindungsgemäße Stackanordnungen 16 können einige wenige, beispielsweise 30, 60 bis viele, beispielsweise 400 bis etwa 900 Ebenen aufweisen. Denkbar sind grundsätzlich auch Stackanordnungen 16 mit mehr als 900 Ebenen, allerdings ist zu beachten, dass die Anforderungen an die mechanische Stabilität der Anordnung mit der Anzahl der Ebenen steigen.

Direkt unterhalb der Topplatte 40 der Stackanordnungen 16 kann zwischen oberster MEA 20 und der Topplatte 40 ein weiterer Interkonnektor 22 (nicht gezeigt) oder eine Konnektorplatte (nicht gezeigt) eingefügt sein. Die Konnektorplatte ist vorzugsweise elektrisch leitend ausgeführt, um eine elektrische Verbindung zwischen Stack und Top- oder Bodenplatte zu realisieren, und weist weiter vorzugsweise eine Antihaftbeschichtung auf. Die Antihaftbeschichtung dient einer mechanischen Entkopplung des Stacks von der Top- oder Bodenplatte. Die Konnektorplatte kann zusätzlich eine Strukturierung aufweisen, die derart ausgebildet ist, dass bei Änderungen der Temperatur die unterschiedlichen thermischen Wärmeausdehnungen der unterschiedlichen Materialien mechanisch ausgleichbar, insbesondere quer zur Stapelrichtung, sind.

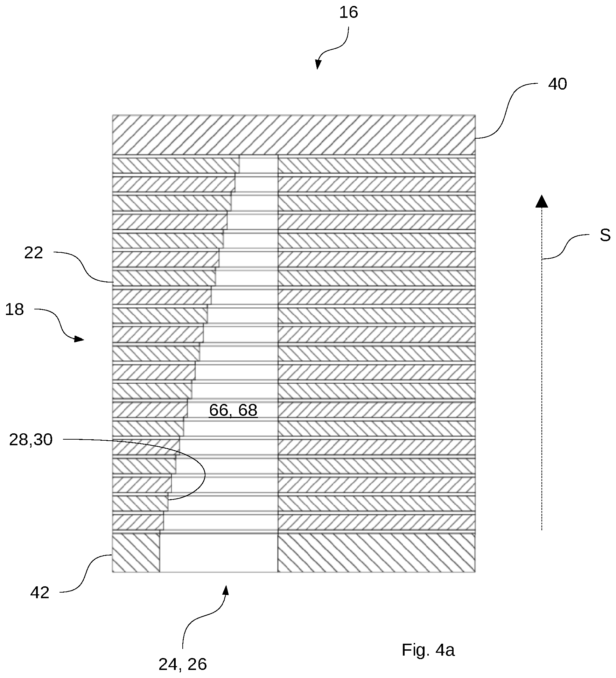

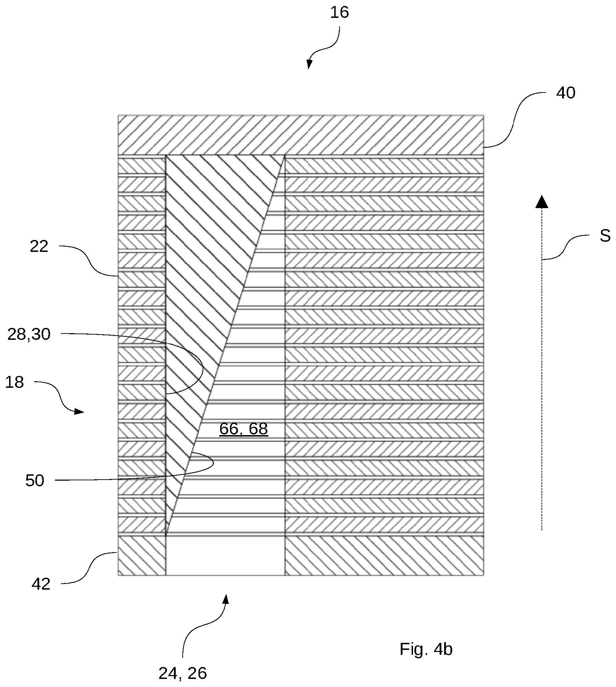

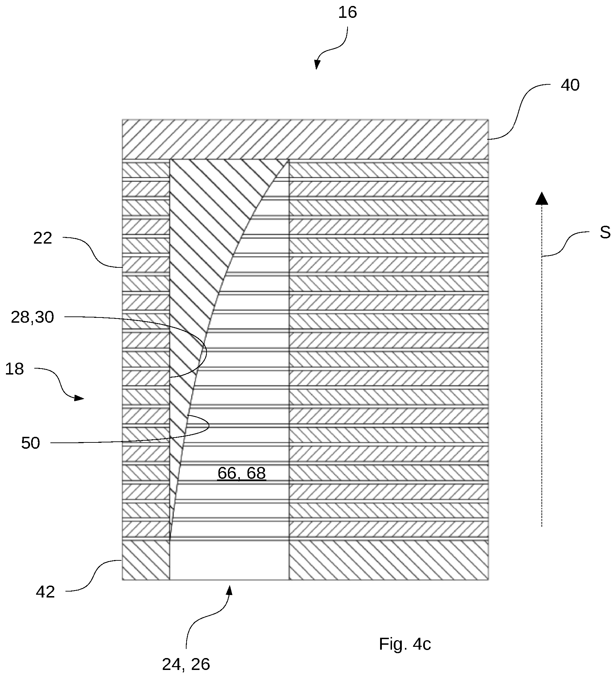

Die Figuren 4a, 4b, 4c zeigen drei schematische Teilschnitte des Querschnitts einer Stackanordnung 16 mit einem sich verjüngenden Querschnitt einer Manifoldstruktur 66, 68. Insbesondere zeigen die Figuren 4a-c jeweils eine sich verjüngende Manifoldstruktur 66, 68, bei der sich die Verjüngung ausgehend von der Bodenplatte 42 über die in Stapelrichtung S übereinandergestapelten Elektrolysezellen 18 bis zu der die Manifoldstruktur 66, 68 oben dichtend abschließenden Topplatte 40 hin erstreckt. Die Verjüngung kann in der Eduktgas-Manifoldstruktur 66 und/oder in der Produktgas-Manifoldstruktur 68 vorgesehen sein.

In dem Beispiel nach Figur 4a ist die Verjüngung der Manifoldstruktur 66, 68 mittels der in den Interkonnektoren 22 eingearbeiteten Manifoldöffnungen 28, 30 ausgeführt. Wie schematisch angedeutet, haben die Interkonnektoren 22 dafür unterschiedlich große Manifoldöffnungen 28, 30, wobei die Interkonnektoren 22 einzelner Elektrolysezellen derart ausgesucht und die Elektrolysezellen 18 derart gestapelt sind, dass sich in der Stackanordnung 16 eine sich verjüngende Struktur ergibt. Wie gezeigt, kann damit insbesondere eine etwa keilförmig verlaufende Struktur realisiert sein. Eine Keilform wird zum Beispiel erreicht, wenn die Manifoldöffnungen 28, 30 der Interkonnektoren 22 jeweils etwa rechteckig mit zwei Seitenlängen ausgebildet sind und sich die Manifoldöffnungen 28, 30 in Stapelrichtung S nach oben hin entlang einer Seitenlänge verengen. Alternativ kann die sich verjüngende Struktur auch etwa konisch geformt sein. Eine Pyramidenform oder Pyramidenstumpfform wird zum Beispiel erreicht, wenn die Manifoldöffnungen 28, 30 der Interkonnektoren 22 jeweils etwa rechteckig mit zwei Seitenlängen ausgebildet sind und sich die Manifoldöffnungen 28, 30 in Stapelrichtung S nach oben hin entlang beider Seitenlängen verengen.

Figur 4b zeigt eine sich verjüngende Manifoldstruktur 66, 68, bei der die Verjüngung mittels eines in die Manifoldstruktur 66, 68 eingelegten Einlegekörpers 50 ausgeführt ist. Die Interkonnektoren 22 der einzelnen Elektrolysezellen 18 haben jeweils gleichgroße Manifoldöffnungen 28, 30. Damit können identische Interkonnektoren 22 für die Bereitstellung der einzelnen Elektrolysezellen 18 einer Stackanordnung 16 verwendet werden, was den Herstellungsaufwand deutlich reduziert. Zur Ausbildung der Verjüngung wird der Einlegekörper 50 in die mittels der Manifoldöffnungen 28, 30 ausgebildeten Manifoldstruktur 66, 68 eingelegt. Der Einlegekörper 50 kann - wie gezeigt - einen etwa dreieckförmigen Querschnitt in Stapelrichtung S aufweisen, so dass eine sich keilförmig verjüngende Struktur realisiert ist.

Figur 4c zeigt eine besondere Form einer mittels eines Einlegekörpers 50 hergestellten Verjüngung der Manifoldstruktur 66, 68. Wie in der Ausgestaltung nach Fig. 4b haben die Interkonnektoren 22 der einzelnen Elektrolysezellen 18 jeweils gleichgroße Manifoldöffnungen 28, 30. Der Einlegekörper 50 weist im Gegensatz zur Ausgestaltung in Fig. 4b keine geradlinig verlaufende, sondern eine gewölbt verlaufende Verjüngungsfläche auf. Damit wird eine sich gewölbt verjüngende Manifoldstruktur 66, 68 realisiert, die eine besonders laminare Strömung des Eduktgases bzw. Produktgases in die Elektrolysezellen 18 hinein bzw. aus den Elektrolysezellen 18 heraus ermöglicht.

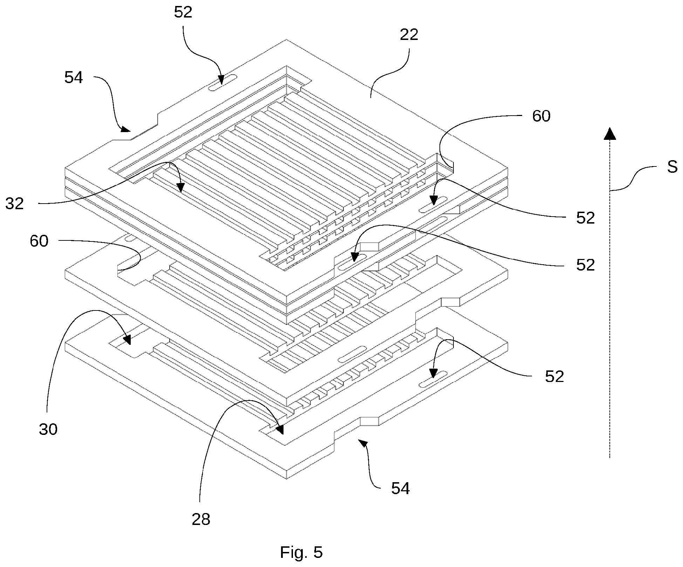

Figur 5 zeigt eine Stackanordnung 16, bei der zur Veranschaulichung von Details lediglich die Interkonnektoren 22 einzelner Elektrolysezellen 18 dargestellt sind. Die Interkonnektoren 22 weisen jeweils mindestens ein Orientierungsmerkmal 60 auf, in dem hier gezeigten Beispiel eine mit Führungskanälen ausgebildete Eduktgas-Leitungsstruktur 32, zwei Manifoldöffnungen 28, 30, sowie auf zwei gegenüberliegenden Seiten am Rand jeweils eine - im gezeigten Beispiel als Langloch - ausgebildete Kontakteinrichtung 52 zur Herstellung eines elektrisch leitenden Kontakts mit dem Interkonnektor 22. Zusätzlich zu der als Langloch ausgeführten Kontakteinrichtung 52 ist an den zwei gegenüberliegenden Seitenrändern des Interkonnektors 22 jeweils eine Aussparung 54 in den Randbereich des Interkonnektors 22 eingearbeitet. Die im gezeigten Beispiel als Langloch ausgebildete Kontakteinrichtung 52 kann zum Anschluss von Messmitteln zum Testen der Stackanordnung dienen, um beispielsweise defekte Elektrolysezellen zu identifizieren.

Die Interkonnektoren 22 sind in dieser Ausgestaltung jeweils um 180° gedreht aufeinandergestapelt, so dass die als Langlöcher ausgeführten Kontakteinrichtungen 52 und die Aussparungen 54 jeweils alternierend übereinander im Stapel angeordnet sind. Das Orientierungsmerkmal 60 dient dazu, Fehler beim Stapeln zu vermeiden und durch technische Vorkehrungen bzw. Einrichtungen eine sofortige oder frühzeitige Fehleraufdeckung und -verhinderung zu ermöglichen. Die Idee hierzu entstammt dem Poka-Yoke-Prinzip. Ist eine gestapelte Stackanordnung 16 nach dem Stapeln erst gefügt, lässt sich ein Fehler im Stapel nicht mehr beheben. Solange die Stackanordnung 16 noch nicht gefügt ist, ließe sich ein Stapelfehler noch beheben.

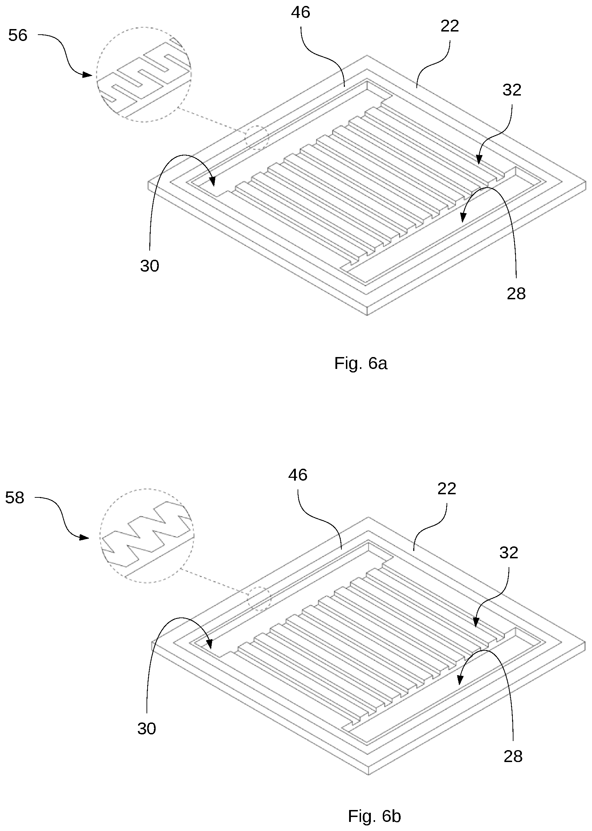

Die Figuren 6a, 6b zeigen jeweils einen Interkonnektor 22 mit einer auf der Wasserstoffseite des Interkonnektors 22 angeordneten Glasdichtung 46. Wie jeweils in einer Detailansicht der Figuren 6a und 6b gezeigt, können die Glasdichtungen 46 in einer speziellen Form auf den Interkonnektor 22 aufgebracht sein. Vorliegend ist in Fig. 6a ein mäanderförmiger Verlauf und in Fig. 6a ist ein zickzackförmiger Verlauf der auf den Interkonnektor 22 aufgebrachten Glasdichtung 46 gezeigt. Denkbar sind darüber hinaus auch andere Verlaufsformen. Diese spezielle Auftrageform erhöht die Streckenlänge der bandförmigen Glasdichtung im Gegensatz zu einer geradlinigen Führung. Damit kann bei gleicher Menge an Dichtungsmaterial im Vergleich zu einer geradlinigen Führung ein größere Oberfläche des Dichtungsmaterials bereitgestellt werden, was bei einem sich anschließenden Sinterprozess eine bessere Entgasung des Dichtungsmaterial ermöglicht. Diese bessere Entgasung kann den Sinterungsprozess beschleunigen. Alternativ ist bei weniger Menge an Dichtungsmaterial die gleiche Fläche abdichtbar. Dabei wird Dichtungsmaterial eingespart, da weniger Materialauftrag erfolgt, die Dichtleistung wird nicht beeinträchtigt und es wird überflüssiges Dichtungsmaterial vermieden, das beim Sintern aus dem Stack heraustreten kann.

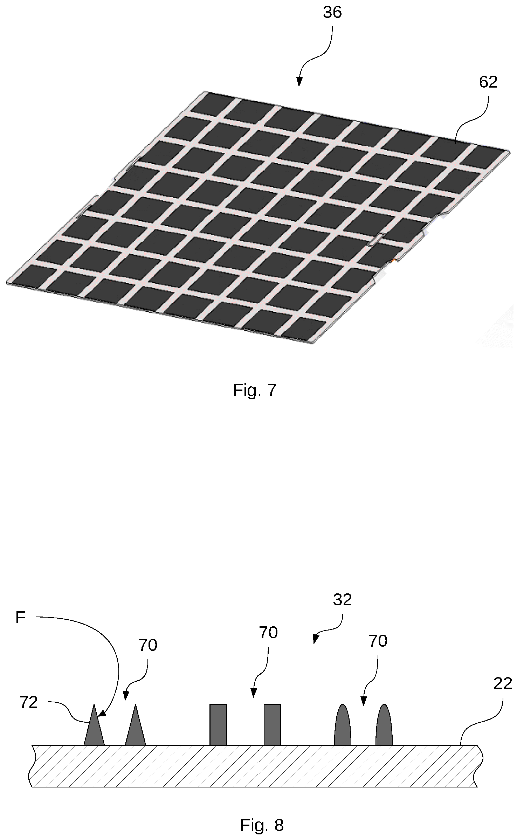

Figur 7 zeigt schematisch eine Konnektorplatte 36, die beispielsweise unterhalb einer Topplatte 40 bzw. oberhalb einer Bodenplatte 42 angeordnet werden kann. Zumindest auf einer Seite weist die Konnektorplatte 62 eine Beschichtung 62 auf. Die Beschichtung 62 kann - wie im gezeigten Beispiel - in der Art eines Schachbrettmusters auf der Oberfläche der Konnektorplatte 36 angeordnet sein. Auch auf der nicht gezeigten Seite der Konnektorplatte 36 kann eine Beschichtung vorliegen.

Figur 8 zeigt ganz schematisch Beispiele von Kanalquerschnittsformen einer als Kanalstruktur ausgebildeten Eduktgas-Leitungsstruktur 32 auf der Wasserstoffseite eines Interkonnektors 22. Die gezeigte Kanalstruktur ist in Schnittdarstellung dargestellt. Wie die Figur zeigt, können die Kanäle 70 mittels zweier benachbart zueinander angeordneten Kanalstege 72 voneinander getrennt sein. Das gezeigte Beispiel veranschaulicht denkbare Querschnittsformen der Kanalstege 72 bzw. die damit ausgeformten Querschnittsformen der Kanäle 70. Oberhalb der Kanalstege 72 ist in der Stackanordnung 16 eine MEA 20 angeordnet (nicht dargestellt). Die Kanäle 70 sind nach unten durch den Körper des Interkonnektors 22 oder einer auf dem Interkonnektor 22 vorliegenden Beschichtung begrenzt. Nach oben sind die Kanäle 70 hin zu einer darüber angeordneten MEA 20 (nicht dargestellt) offen. Für den Elektrolyseprozess kommt das in den Kanälen 70 geführte Eduktgas an den offenen Oberseiten der Kanäle 70 mit der MEA 20 in Kontakt. Um auch im Randbereich der Kanäle 70 eine ausreichende Menge an Eduktgas für den Kontakt mit der MEA 20 bereitzustellen, ist vorgesehen, dass die Flankensteilheit F der Seitenwände der Kanalstege 72 größer als oder gleich 85° ist. Die Flankensteilheit ist dabei als Median auf die mit dem plattenförmigen Interkonnektor 22 definierte Ebene bezogen.

### BEZUGSZEICHENLISTE

| | | | |
|---|---|---|---|
| 10 | Elektrolyseanordnung | 50 | Einlegekörper |
| 12 | Gehäuse | 52 | Kontakteinrichtung |
| 14 | Innenraum | 54 | Aussparung |
| 16 | Stackanordnung | 56 | mäanderförmige Struktur |
| 18 | Elektrolysezellen | 58 | zickzackförmige Struktur |
| 20 | Membran-Elektroden-Anordnung | 60 | Orientierungsmerkmal |
| 22 | Interkonnektor | 62 | Beschichtung |
| 24 | Eduktgas-Öffnung | 64 | Aussparungen |
| 26 | Produktgas-Öffnung | 66 | Eduktgas-Manifoldstruktur |
| 28 | Manifoldöffnung | 68 | Produktgas-Manifoldstruktur |
| 30 | Manifoldöffnung | 70 | Kanäle |
| 32 | Eduktgas-Leitungsstruktur | 72 | Kanalstege |
| 34 | sauerstoffdurchlässige Struktur | | |
| 36 | Konnektorplatte | S | Stapelrichtung |
| 38 | netzartiges Metallgeflecht | F | Flankensteilheit |
| 40 | Topplatte | | |
| 42 | Bodenplatte | | |
| 44 | Glasdichtung | | |
| 46 | Glasdichtung | | |
| 48 | Auflageelemente | | |

## Patentansprüche

1. Elektrolyseanordnung (10) umfassend
wenigstens ein Gehäuse (12) mit einem Innenraum (14),
und wenigstens einer im Innenraum (14) des Gehäuses (12) angeordneten Stackanordnung (16),
wobei die Stackanordnung (16) mehrere in eine Stapelrichtung (S) gestapelte Elektrolysezellen (18) umfasst,
wobei zumindest einige der Elektrolysezellen (18) jeweils eine Membran-Elektroden-Anordnung (MEA) (20) und einen Interkonnektor (22) umfassen, und
wobei die Membran-Elektroden-Anordnung (20) und der Interkonnektor (22) jeweils eine Sauerstoffseite und eine Wasserstoffseite aufweisen,
**dadurch gekennzeichnet, dass**
in der Stackanordnung (16) genau eine Eduktgas-Manifoldstruktur (66) zur Bereitstellung von Eduktgas an die Elektrolysezellen (18) und genau eine Produktgas-Manifoldstruktur (68) zum Abführen von Produktgas von den Elektrolysezellen (18) ausgebildet sind,
wobei die Stackanordnung (16) eine Eduktgas-Öffnung (24) zur Einleitung von Eduktgas in die Eduktgas-Manifoldstruktur (66) und eine Produktgas-Öffnung (26) zur Ausleitung von Produktgas aus der Produktgas-Manifoldstruktur (68) aufweist,
wobei die Eduktgas-Manifoldstruktur (66) und die Produktgas-Manifoldstruktur (68) innerhalb der Stackanordnung (16) jeweils mittels in den Interkonnektoren (22) eingearbeiteten Manifoldöffnungen (28, 30) ausgebildet sind,
wobei zwischen der Membran-Elektroden-Anordnung (20) und dem Interkonnektor (22) zumindest einiger Elektrolysezellen (18) eine zur Leitung von Eduktgas aus der Eduktgas-Manifoldstruktur (66) heraus entlang der Wasserstoffseite der Membran-Elektroden-Anordnungen (20) und hin zur Produktgas-Manifoldstruktur (68) ausgebildete Eduktgas-Leitungsstruktur (32) angeordnet ist,
wobei zumindest einige Membran-Elektroden-Anordnungen (20) auf ihrer Sauerstoffseite eine sauerstoffdurchlässige Struktur (34) aufweisen, und wobei die sauerstoffdurchlässige Struktur (34) derart angeordnet und ausgebildet ist, dass ein an der Sauerstoffseite der Membran-Elektroden-Anordnung (20) freigesetzter Sauerstoff in den Innenraum (14) des Gehäuses (12) ableitbar ist,
wobei das Gehäuse (12) eine Öffnung zur Ableitung von Sauerstoff aus dem Innenraum aufweist, und
wobei die sauerstoffdurchlässige Struktur (34) ein poröses Material umfasst und/oder in der Art von Führungskanälen ausgebildet ist.

2. Elektrolyseanordnung (10) nach Anspruch 1, **dadurch gekennzeichnet, dass** in zumindest einigen Elektrolysezellen (18) die Eduktgas-Leitungsstruktur (32) auf der Wasserstoffseite des Interkonnektors (22) der Elektrolysezelle (18) ausgebildet ist und/oder dass in zumindest einigen Elektrolysezellen (18) die Eduktgas-Leitungsstruktur (32) auf der Wasserstoffseite der Membran-Elektroden-Anordnungen (20) der Elektrolysezelle (18) ausgebildet ist.

3. Elektrolyseanordnung (10) nach einem der vorangehenden Ansprüche, **dadurch gekennzeichnet, dass** auf der Sauerstoffseite mindestens einiger Interkonnektoren (22) eine Sauerstoff-Leitungsstruktur (36) zur Führung von auf der Sauerstoffseite einer Membran-Elektroden-Anordnung (20) freigesetztem Sauerstoff ausgebildet ist.

4. Elektrolyseanordnung (10) nach einem der vorangehenden Ansprüche, **dadurch gekennzeichnet, dass** zumindest einige der Elektrolysezellen (18) ein netzartiges Metallgeflecht (38), vorzugsweise aufweisend Nickel, insbesondere eine Eisen-NickelLegierung, umfassen, das zwischen Membran-Elektroden-Anordnung (20) und Interkonnektor (22) angeordnet ist.

5. Elektrolyseanordnung (10) nach einem der vorangehenden Ansprüche, **dadurch gekennzeichnet, dass** die Eduktgas-Manifoldstruktur (66) derart ausgebildet und eingerichtet ist, dass sich sein gasführender Querschnitt in Strömungsrichtung des durch die Eduktgas-Manifoldstruktur (66) geführten Eduktgases verjüngt und/oder dass die Produktgas-Manifoldstruktur (68) derart ausgebildet und eingerichtet ist, dass sich sein gasführender Querschnitt entgegen der Strömungsrichtung des durch die Produktgas-Manifoldstruktur (68) geführten Produktgases verjüngt.

6. Elektrolyseanordnung (10) nach einem der vorangehenden Ansprüche, **dadurch gekennzeichnet, dass** die Eduktgas-Manifoldstruktur (66) und/oder die Produktgas-Manifoldstruktur (68) zumindest bereichsweise keilförmig, prismaförmig, prismastumpfförmig, pyramidenförmig, pyramidenstumpfförmig, konisch oder kegelstumpfförmig ausgebildet ist, und/oder dass wenigstens eine Wandfläche der Eduktgas-Manifoldstruktur (66) und/oder der Produktgas-Manifoldstruktur (68) in Stapelrichtung (S) zumindest bereichsweise gewölbt verläuft.

7. Elektrolyseanordnung (10) nach einem der vorangehenden Ansprüche, **dadurch gekennzeichnet, dass** die Eduktgas-Öffnung (24) und/oder die Produktgas-Öffnung (26) der Stackanordnung (16) stegfrei ausgebildet ist, wobei insbesondere zumindest einige, vorzugsweise sämtliche der Eduktgas-Manifoldstruktur (66) zugeordneten Manifoldöffnungen (28) der Interkonnektoren (22) und/oder zumindest einige, vorzugsweise sämtliche der Produktgas-Manifoldstruktur (68) zugeordneten Manifoldöffnungen (30) der Interkonnektoren (22) stegfrei ausgebildet sind.

8. Elektrolyseanordnung (10) nach einem der vorangehenden Ansprüche, **dadurch gekennzeichnet, dass** die Stackanordnung (16) in Stapelrichtung (S) oben eine die Stackanordnung (16) nach oben begrenzende Topplatte (40) und in Stapelrichtung (S) unten eine die Stackanordnung (16) nach unten begrenzende Bodenplatte (42) aufweist.

9. Elektrolyseanordnung (10) nach Anspruch 8, **dadurch gekennzeichnet, dass** zwischen der Topplatte (40) und der in Stapelrichtung (S) letzten, unterhalb der Topplatte (40) angeordneten Membran-Elektroden-Anordnung (20) eine Konnektorplatte angeordnet ist und/oder dass zwischen der Bodenplatte (42) und der in Stapelrichtung (S) ersten, oberhalb der Bodenplatte (40) angeordneten Membran-Elektroden-Anordnung (20) eine Konnektorplatte angeordnet ist.

10. Elektrolyseanordnung (10) nach Anspruch 8 oder 9, **dadurch gekennzeichnet, dass** die Konnektorplatte, und/oder die Topplatte und/oder die Bodenplatte eine Beschichtung aufweist, wobei die Beschichtung eine halbleitende Oxid-Keramik umfasst, insbesondere eine Keramik aufweisend Lanthan (La), Strontium (Sr), Mangan (Mn) und/oder Cobalt (Co), vorzugsweise Lanthan-Strontium-Mangan-Cobalt (LSMC), Mangan Cobalt Eisenoxid (MCF), Lanthan Strontium Manganit (LSM), Lanthan-Strontium-Cobalt-Eisenoxid (LSCF), oder Lanthan-Mangan-Cobalt (LMC).

11. Elektrolyseanordnung (10) nach einem der vorangehenden Ansprüche, **dadurch gekennzeichnet, dass** die Öffnung des Gehäuses (12) von einem einstellbaren Ventil beherrscht wird.

12. Elektrolyseanordnung (10) nach Anspruch 11, **dadurch gekennzeichnet, dass** ein Sauerstoff-Partialdruck im Innenraum (14) des Gehäuses (12) mittels des Ventils regelbar ist.

13. Elektrolyseanordnung (10) nach einem der vorangehenden Ansprüche, **dadurch gekennzeichnet, dass** zumindest einige Komponenten der Elektrolyseanordnung (10), wie Gehäuse (12), Stackanordnung (16), Elektrolysezelle (18), Membran-Elektroden-Anordnungen (20), Interkonnektoren (22), Konnektorplatte (36), Topplatte (40) und/oder Bodenplatte (42) einen maschinenlesbaren und/oder menschenlesbaren Identifikator aufweisen.

14. Elektrolyseanordnung (10) nach einem der vorangehenden Ansprüche, **dadurch gekennzeichnet, dass** zumindest einige Komponenten der Stackanordnung (16), wie Membran-Elektroden-Anordnungen (20), Interkonnektoren (22), Konnektorplatten (36), Topplatte (40) und/oder Bodenplatte (42) jeweils ein Orientierungsmerkmal (60) aufweisen mittels dem die Komponenten zur Herstellung der Stackanordnung (16) orientiert, insbesondere nach dem Poka-Yoke-Prinzip, im Stapelverbund ausrichtbar sind.

15. Elektrolyseanordnung (10) nach einem der vorangehenden Ansprüche, **dadurch gekennzeichnet, dass** zumindest einige Interkonnektoren (22) in der Stackanordnung (16) anhand von an den Interkonnektoren (22) angeordneten Orientierungsmerkmalen (60) abwechselnd um 180° gedreht gestapelt sind.
